# DEMANDE DE BREVET EUROPEEN

(11) **EP 3 241 636 A1**
(43) Date de publication de la demande: **08.11.2017**
(21) Numéro de dépôt: 16168124.2
(22) Date de dépôt: 03.05.2016
(51) Int. Cl.: B22F 7/06, C22C 33/02

(54) **PROCEDE DE FABRICATION D'UNE PIECE COMPOSITE**

(71) Demandeur: The Swatch Group Research and Development Ltd., 2074 Marin (CH)
(72) Inventeur: Luebbe, Henning, 2502 Bienne (CH); Bourban, Stewes, 1589 Chabrey (CH)
(74) Mandataire: Goulette, Ludivine

(57) **Abrégé**

L'invention se rapporte à un procédé de fabrication d'une pièce composite comportant une première matière comportant de la poudre d'acier 316L et une deuxième matière comportant de la poudre de zircone formée en une étape unique de frittage.

## Description

### Domaine de l'invention

L'invention se rapporte à un procédé de fabrication d'une pièce composite et plus précisément d'une pièce composite métal - céramique, c'est-à-dire une pièce combinant deux matériaux distincts respectivement à base de métal et de céramique.

### Arrière-plan de l'invention

Le document EP 2 380 864 décrit la fabrication d'un élément céramique incrusté par des décors galvaniques. Ce procédé apporte de nombreux avantages mais oblige à réaliser beaucoup d'étapes de mise en oeuvre.

### Résumé de l'invention

Le but de la présente invention est de pallier tout ou partie les inconvénients cités précédemment en proposant un procédé de fabrication d'une pièce composite métal - céramique qui comporte moins d'étapes pour être mis en oeuvre.

A cet effet, l'invention se rapporte à un procédé de fabrication d'une pièce composite comportant les étapes suivantes :
a) former une première matière comportant de la poudre d'acier 316L et au moins un premier adjuvant et une deuxième matière comportant de la poudre de zircone et au moins un deuxième adjuvant ;
b) agglomérer une des première et deuxième matières pour former au moins une première partie d'une ébauche ;
c) agglomérer l'autre des première et deuxième matières contre la première partie de l'ébauche pour former au moins une deuxième partie de l'ébauche ;
d) fritter l'ébauche afin d'obtenir la pièce composite formée par de l'acier 316L et de la zircone.

On comprend donc que la pièce composite peut être majoritairement en métal ou alternativement être majoritairement en céramique. De plus, on remarque que les étapes sont plus simples à mettre en oeuvre et l'ébauche formée des deux types de matières est frittée en une seule étape et non consécutivement pour chaque matière ce qui évite les multiples manipulations des pièces intermédiaires comme dans le cas de l'arrière-plan de l'invention.

Conformément à d'autres variantes avantageuses de l'invention :
- ledit au moins un premier adjuvant comporte un liant et/ou un surfactant et/ou un plastifiant ;
- ledit au moins un premier adjuvant comporte un composé organique et/ou un polymère ;
- ledit au moins un deuxième adjuvant comporte un liant et/ou un surfactant et/ou un plastifiant ;
- ledit au moins un deuxième adjuvant comporte un composé organique et/ou un polymère ;
- lors de l'étape a), les grains de la poudre d'acier 316L et les grains de la poudre de zircone sont agencés pour permettre un retrait sensiblement identique lors de l'étape d) ;
- lors de l'étape b), la première matière est agglomérée et, lors de l'étape c), la deuxième matière est agglomérée ;
- lors de l'étape b), la deuxième matière est agglomérée et, lors de l'étape c), la première matière est agglomérée ;
- l'étape b) est réalisée par injection, pressage, impression 3D ou coulage en barbotine ;
- l'étape c) est réalisée par injection, pressage, surmoulage, enduction par trempage, impression 3D ou coulage en barbotine ;
- le procédé comporte une étape finale de finissage permettant d'améliorer l'esthétique de la pièce composite formée lors de l'étape d).

De plus, l'invention se rapporte à une pièce composite obtenue à partir du procédé selon l'une des revendications précédentes, caractérisée en ce que la pièce composite combine, de manière monobloc, deux matériaux distincts respectivement à base d'acier 316L et de zircone.

On comprend donc que la pièce composite comporte deux matériaux qui sont indissociables qui peut être majoritairement en métal ou alternativement être majoritairement en céramique. Les deux matériaux étant frittés en même temps, ils forment une pièce monobloc bien qu'étant chacun de nature différente.

Conformément à d'autres variantes avantageuses de l'invention :
- la pièce composite forme tout ou partie d'un boîtier, d'une carrure, d'une corne, d'un cadran, d'un réhaut, d'une lunette, d'un poussoir, d'une couronne, d'un fond de boîtier, d'une aiguille, d'un bracelet, d'un maillon, d'un fermoir, d'un décor, d'une applique ou d'une glace

### Description sommaire des dessins

D'autres particularités et avantages ressortiront clairement de la description qui en est faite ci-après, à titre indicatif et nullement limitatif, en référence à l'unique dessin qui est une représentation d'éléments d'habillage pouvant être mise en oeuvre selon l'invention.

### Description détaillée des modes de réalisation préférés

Comme expliqué ci-dessus, l'invention se rapporte à une pièce composite métal - céramique. Cette pièce composite a été imaginée pour des applications dans le domaine horloger comme par exemple des éléments d'habillage d'une pièce d'horlogerie. Bien entendu, la pièce composite selon l'invention ne saurait se limiter à l'habillage d'une pièce d'horlogerie et plus généralement à l'horlogerie. Ainsi, à titre nullement limitatif, on peut également imaginer que cette pièce composite puisse être appliquée dans le domaine des arts de la table, de la coutellerie, de la bijouterie ou de la joaillerie.

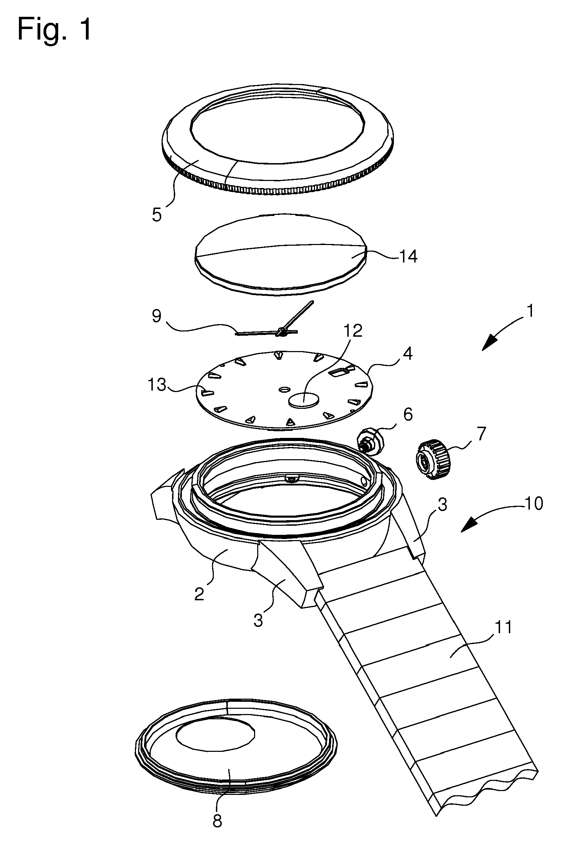

A titre d'exemples nullement limitatifs et en relation avec la figure 1, la pièce composite peut former notamment tout ou partie d'un boîtier 1 comme la carrure 2 et les cornes 3, d'un cadran 4, d'un réhaut, d'une lunette 5, d'un poussoir 6, d'une couronne 7, d'un fond 8 de boîtier, d'une aiguille 9, d'un bracelet 10 comme un maillon 11, d'un décor 12, d'une applique 13, d'une glace 14 ou d'un fermoir.

L'invention se rapporte donc à un procédé de fabrication d'une pièce composite. Le procédé comporte une première étape a) destinée à former une première matière comportant de la poudre, par exemple, d'acier 316L et au moins un premier adjuvant et une deuxième matière comportant de la poudre, par exemple, de zircone et au moins un deuxième adjuvant.

Préférentiellement, les première et deuxième matières, parfois appelées « feedstock » dans le domaine de l'injection, forment chacune des poudres dont les grains permettent un retrait lors du frittage sensiblement identique.

De plus, ledit au moins un premier adjuvant et ledit au moins un deuxième adjuvant peuvent comporter un liant et/ou un surfactant et/ou un plastifiant suivant la pièce à fabriquer et/ou le système d'agglomération utilisé. Ledit au moins un premier adjuvant et ledit au moins un deuxième adjuvant peuvent ainsi comporter un composé organique et/ou un polymère, éventuellement, complété par un additif comme, par exemple, un composé gélifiant et/ou un composé tensioactif.

Le procédé se poursuit avec une deuxième étape b) destinée à agglomérer une des première et deuxième matières dans un moule pour former au moins une première partie d'une ébauche. Avantageusement selon l'invention, on comprend donc que, lors de l'étape b) du procédé, la première matière ou la deuxième matière peut être indifféremment agglomérée. Cela signifie que la pièce composite pourra être « à base de » métal ou « à base de » céramique. A titre d'exemple, l'étape b) peut être réalisée par injection, pressage, impression 3D ou coulage en barbotine. Toutefois, de manière préférée, l'injection est utilisée pour permettre l'obtention de géométries plus variées.

Le procédé continue avec la troisième étape c) destinée à agglomérer l'autre des première et deuxième matières contre la première partie de l'ébauche pour former au moins une deuxième partie de l'ébauche. A titre d'exemple, l'étape c) peut être réalisée par injection, pressage, surmoulage, enduction par trempage, impression 3D ou coulage en barbotine. Toutefois, de manière préférée, l'injection est utilisée pour permettre l'obtention de géométries plus variées.

Préférentiellement, on comprend donc que les étapes b) et c) peuvent consister en des moulages par injection de céramique et de métal également connus sous les abréviations anglaises CIM (« Ceramic Injection Molding ») et MIM (« Métal Injection Molding »).

Enfin, le procédé se poursuit avec l'étape d) destinée à fritter l'ébauche afin d'obtenir la pièce composite formée par de l'acier 316L et de la zircone. A titre d'exemple, il est ainsi possible d'agglomérer, lors de l'étape b), une zircone formant un corps principal de lunette avec des évidements et, lors de l'étape c), de l'acier 316L s'agglomérant pour remplir lesdits évidements et ainsi former une ou plusieurs graduations. Après frittage, on peut ainsi obtenir une pièce composite principale de couleur noire par exemple apportée par la zircone et comportant des graduations grises par exemple apportées par l'acier 316L. Comme expliqué ci-dessus, l'inverse est également possible.

Avantageusement selon l'invention, l'ébauche formée des deux types de matières est frittée en une seule étape d) et non consécutivement pour chaque matière ce qui évite les multiples manipulations des pièces intermédiaires comme dans le cas de l'arrière-plan de l'invention.

De plus, l'acier 316L est sélectivement choisi car il possède une bonne résistance mécanique aux rayures et à la corrosion, est peu sensible aux champs magnétiques et est anallergique au porté. On comprend donc que l'acier 316L possède des qualités similaires à celles de la zircone et forme donc, en combinaison avec elle, une pièce composite parfaitement adaptée pour notamment des pièces d'habillage d'une pièce d'horlogerie.

Ainsi, à titre d'autres exemples, la pièce composite obtenue selon le procédé peut former un boîtier 1 dont la carrure 2 est en acier 316L et les cornes 3 en zircone (ou inversement), un cadran 4 en zircone dont les heures index sont en acier 316L (ou inversement), une lunette 5 en acier 316L avec des graduations en zircone, ou des maillons 11 de bracelet 10 en acier 316L avec des décors en zircone (ou inversement).

Bien entendu, la présente invention ne se limite pas à l'exemple illustré mais est susceptible de diverses variantes et modifications qui apparaîtront à l'homme de l'art. En particulier, l'étape d) peut également comporter une phase de déliantage destinée à retirer lesdits au moins un premier et au moins un deuxième adjuvants et, plus généralement tout additif utilisé avant la phase de frittage destinée à densifier l'ébauche.

Une étape finale de finissage permettant d'améliorer l'esthétique de la pièce composite formée lors de l'étape d) est également envisageable. Une telle étape de finissage peut typiquement comporter un usinage et/ou un brossage et/ou un polissage permettant de rendre la pièce composite plus attrayante esthétiquement.

## Revendications

1. Procédé de fabrication d'une pièce composite comportant les étapes suivantes :
a) former une première matière comportant de la poudre d'acier 316L et au moins un premier adjuvant et une deuxième matière comportant de la poudre de zircone et au moins un deuxième adjuvant ;
b) agglomérer une des première et deuxième matières pour former au moins une première partie d'une ébauche ;
c) agglomérer l'autre des première et deuxième matières contre la première partie de l'ébauche pour former au moins une deuxième partie de l'ébauche ;
d) fritter l'ébauche afin d'obtenir la pièce composite formée par de l'acier 316L et de la zircone.

2. Procédé selon la revendication précédente, **caractérisé en ce que** ledit au moins un premier adjuvant comporte un liant et/ou un surfactant et/ou un plastifiant.

3. Procédé selon la revendication précédente, **caractérisé en ce que** ledit au moins un premier adjuvant comporte un composé organique et/ou un polymère.

4. Procédé selon l'une des revendications précédentes, **caractérisé en ce que** ledit au moins un deuxième adjuvant comporte un liant et/ou un surfactant et/ou un plastifiant.

5. Procédé selon la revendication précédente, **caractérisé en ce que** ledit au moins un deuxième adjuvant comporte un composé organique et/ou un polymère.

6. Procédé selon l'une des revendications précédentes, **caractérisé en ce que**, lors de l'étape a), les grains de la poudre d'acier 316L et les grains de la poudre de zircone sont agencés pour permettre un retrait sensiblement identique lors de l'étape d).

7. Procédé selon l'une des revendications précédente, **caractérisé en ce que**, lors de l'étape b), la première matière est agglomérée et, lors de l'étape c), la deuxième matière est agglomérée.

8. Procédé selon l'une des revendications 1 à 6, **caractérisé en ce que**, lors de l'étape b), la deuxième matière est agglomérée et, lors de l'étape c), la première matière est agglomérée.

9. Procédé selon l'une des revendications précédente, **caractérisé en ce que** l'étape b) est réalisée par injection, pressage, impression 3D ou coulage en barbotine.

10. Procédé selon l'une des revendications précédente, **caractérisé en ce que** l'étape c) est réalisée par injection, pressage, surmoulage, enduction par trempage, impression 3D ou coulage en barbotine.

11. Procédé selon l'une des revendications précédentes, **caractérisé en ce que** le procédé comporte une étape finale de finissage permettant d'améliorer l'esthétique de la pièce composite formée lors de l'étape d).

12. Procédé selon la revendication précédente, **caractérisé en ce que** l'étape de finissage comporte un usinage et/ou un brossage et/ou un polissage.

13. Pièce composite obtenue à partir du procédé selon l'une des revendications précédentes, **caractérisée en ce que** la pièce composite combine, de manière monobloc, deux matériaux distincts respectivement à base d'acier 316L et de zircone.

14. Pièce composite selon la revendication précédente, **caractérisée en ce qu'**elle forme tout ou partie d'un boîtier (1), d'une carrure (2), d'une corne (3), d'un cadran (4, 22), d'un réhaut, d'une lunette (5), d'un poussoir (6), d'une couronne (7), d'un fond (8) de boîtier, d'une aiguille (9), d'un bracelet (10), d'un maillon (11), d'un fermoir, d'un décor (12), d'une applique (13) ou d'une glace (14).
